## Europäisches Patentamt
## European Patent Office
## Office européen des brevets

(19)

(11) Veröffentlichungsnummer: **0 053 238**
**B1**

(12) # EUROPÄISCHE PATENTSCHRIFT

(45) Veröffentlichungstag der Patentschrift:
06.03.85

(21) Anmeldenummer: 81107950.8

(22) Anmeldetag: 06.10.81

(51) Int. Cl.⁴: **H 04 B 9/00**, H 04 Q 11/04,
H 04 M 11/06

(54) Dienstintegriertes digitales Übertragungssystem.

(30) Priorität: 27.11.80 DE 3044605

(43) Veröffentlichungstag der Anmeldung:
09.06.82 Patentblatt 82/23

(45) Bekanntmachung des Hinweises auf die Patenterteilung:
06.03.85 Patentblatt 85/10

(84) Benannte Vertragsstaaten:
AT CH DE FR GB LI NL SE

(56) Entgegenhaltungen:
EP - A - 0 020 878
DE - A - 2 538 638
DE - A - 2 922 418

PROCEEDINGS OF THE IEEE, Band 68, Nr. 10, Oktober 1980, Seiten 1291-1299 New York, U.S.A. K.Y. CHANG: "Fiberguide systems in the subscriver loop"
THE INTERNATIONAL SYMPOSIUM ON SUBSCRIBER LOOPS AND SERVICES, 20.-24. März 1978, Seiten 39-43 Atlanta, New York, U.S.A. B.S. HELLIWELL et al.: "Optical fibre transmission developments and the local loop"
WISSENSCHAFTLICHE BERICHTE AEG-TELEFUNKEN, Band 53, Nr. 1-2, 26, September 1980, Seiten 72-79 Berlin, DE. H. SCHÜSSLER: "Dienstintegrierter Teilnehmeranschluss mit Lichtwellenleitern"

(73) Patentinhaber: ANT Nachrichtentechnik GmbH,
Gerberstrasse 33, D-7150 Backnang (DE)

(72) Erfinder: Schmack, Hans-Jürgen, Ing. grad.,
Wunnensteinstrasse 3, D-7151 Allmersbach i.T. (DE)
Erfinder: Rauth, Erich, Ing. grad., Falkenweg 18,
D-7151 Auenwald (DE)

(74) Vertreter: Schickle, Gerhard, Dipl.-Ing. et al, ANT
Nachrichtentechnik GmbH Patent- und Lizenzabteilung
Gerberstrasse 33, D-7150 Backnang (DE)

(56) Entgegenhaltungen: (Fortsetzung)
NTG-FACHBERICHTE, THE INTERNATIONAL SYMPOSIUM ON SUBSCRIBER LOOPS AND SERVICES, 15.- 19. September 1980, Seiten 46-50 München, Berlin, DE. M. WELZENBACH et al.: "The application of optical systems for cable tv"

## Beschreibung

Die Erfindung betrifft ein dienstintegriertes digitales in Zeitmultiplex arbeitendes Übertragungssystem gemäß Oberbegriff des Hauptanspruchs.

Durch die DE-OS 2 538 638 ist ein integriertes Nachrichtensystem für die Übertragung und Vermittlung von Bild, Ton und Daten bekanntgeworden, bei dem der Teilnehmeranschluß über zwei gesonderte Glasfasern an die zugehörige zentrale Vermittlungsstelle erfolgt, wobei eine Faser zum Senden und/oder zum Empfangen von Fernsprech- und Videosignalen in Zeitmultiplextechnik benutzt werden.

In der deutschen Offenlegungsschrift 2 922 418 ist ein dienstintegriertes Nachrichten-übertragungs- und Vermittlungssystem für Ton, Bild und Daten vorgeschlagen worden, bei dem nur eine Lichtleitfaser für die Teilnehmeranschlußleitung verwendet wird und bei der wahlweise die Schmalbanddienste mittels Digital-übertragung und Multiplexbildung beim Teilnehmer und/oder die Breitbanddienste mittels analoger Übertragung erfolgen.

Bei beiden Systemen wurden keine Angaben zur Stromversorgung der teilnehmerseitigen Einrichtungen gemacht.

Bei jetzigen Übertragungssystemen erfolgt die Speisung der teilnehmerseitigen Einrichtungen über die Teilnehmeranschlußleitungen aus der Amtsbatterie. In zukünftigen optischen Übertragungssystemen wird eine amtsseitige Speisung wohl nicht beibehalten werden können, da ein Kupferbeipack im Glasfaserkabel einen technischen Rückschritt darstellt und eine kilometerweite Energieübertragung auf optischem Wege problematisch sein dürfte.

Durch den Aufsatz »Optical Fiber Transmission Developments and the Local Loop« von Helliwell et al. in »The International Symposium on Subscriber Loops and Services«, 20.—24. März 1978, ist ein dienstintegriertes Teilnehmersystem mit optischer Übertragung bekanntgeworden, bei dem eine »Standby-Batterie« die Teilnehmer-Einrichtungen bei Netzausfall mit Strom versorgt, so daß eine Sprechverbindung aufrechterhalten werden kann.

In dem Aufsatz »Fiberguide Systems in the Subscriber Loop« in Proceedings of the IEEE, Vol. 58, No. 10, Oktober 1980, ist ein ähnliches System wie das zuvor beschriebene, diskutiert, wobei ebenfalls bei Netzausfall eine Batterie die wesentlichen Dienste ermöglicht. Allerdings sind die Multiplex- und Demultiplex-Einrichtungen derart konstruiert, daß eine Verminderung der Bruttoübertragungsrate nicht eintritt.

Der Erfindung lag deshalb die Aufgabe zugrunde, ein dienstintegriertes digitales Übertragungssystem der obigen Art anzugeben, bei dem ein Netzausfall keinen totalen Systemausfall bewirkt, sondern das es ermöglicht, Notdienste wie Telefon, Telex und andere Dienste mit kleiner Bitrate aufrechtzuerhalten. Dabei soll das Übertragungssystem in möglichst unaufwendiger und energiesparender Weise ausgeführt sein.

Die Lösung erfolgt mit den im Patentanspruch 1 gekennzeichneten Merkmalen.

Das erfindungsgemäße Übertragungssystem weist die Vorteile auf, daß aufgrund der Stromversorgung der teilnehmerseitigen Einrichtungen durch das Netz ein teurer Kupferbeipack beim Glasfaserkabel vermieden werden kann, daß bei Netzausfall die Stromversorgung durch den Ladungsspeicher übernommen und damit die Verfügbarkeit der Schmalbanddienste des Übertragungssystems in keiner Weise beeinflußt wird. Dadurch, daß bei Netzausfall mit verminderter Bitrate, also statt der hohen Bitrate bei Breitbandbetrieb mit der niedrigen Bitrate des Schmalbandbetriebs, übertragen wird, wobei die teilnehmerseitigen Einrichtungen für Breitbanddienste, die den größten Anteil am Stromverbrauch haben, abgeschaltet sind, können so bei erheblich kleinerer Belastung des Ladungsspeichers große Netzausfallzeiten überbrückt werden. Vorteilhafterweise ist in einer Ausgestaltung der Erfindung der Ladungsspeicher eine netzgepufferte Batterie. In einer weiteren Ausgestaltung der Erfindung wird bei Netzausfall ein Alarm erzeugt und als Schmalbandsignal zur Zentrale übertragen, wo er empfangen und zur Umschaltung ausgewertet werden kann. In einer anderen Ausgestaltung der Erfindung erhält das Lichtwellenleitersystem am teilnehmerseitigen Ende zwei parallelgeschaltete optische Empfänger, wobei der eine für Breitbanddienste und der andere für Schmalbanddienste benutzbar ist. Da der Breitbandempfänger mehr Leistung benötigt als der Schmalbandempfänger (beispielsweise eine PIN-Diode), so wird der Breitbandempfänger bei Netzausfall ebenfalls ausgeschaltet.

Es folgt die Beschreibung der Erfindung anhand der Figuren, die ein Ausführungsbeispiel darstellen.

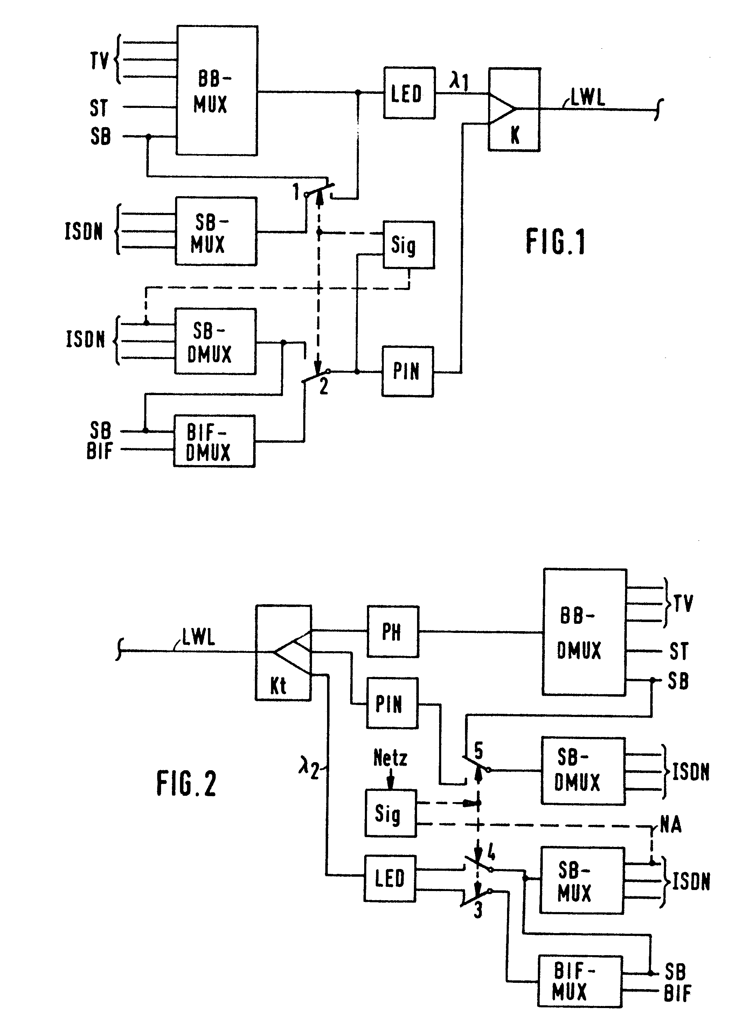

Die Fig. 1 und 2 zeigen Blockschaltbilder der zentralen bw. der teilnehmerseitigen Übertragungseinrichtungen.

In Fig. 1 ist die Breitbandmultiplexbildung aus drei TV-Kanälen, einem Schmalbandmultiplexsignal, Stereotöne ST und einem Schmalbandmultiplexsignal SB, welches wiederum aus den Schmalbanddienstkanälen ISDN mittels Schmalbandmultiplexer SB-MUX gebildet wird, erkennbar.

Das Ausgangssignal des Breitbandmultiplexers BB-MUX wird auf den optischen Sender gegeben, hier eine lichtemittierende Diode LED, dessen Ausgang über einen Richtkoppler K auf den Lichtwellenleiter LWL führt.

In Fig. 2 ist das teilnehmerseitige Ende des Lichtwellenleiters LWL mit dem teilnehmerseitigen Richtkoppler Kt erkennbar, an dessen einem Ausgang eine Fotodiode PH als Empfänger angeschaltet ist, deren Ausgang auf den Breitbanddemultiplexer BB-DMUX und damit zur Auflösung der einzelnen Breitbandkanäle führt. Es sind die drei TV-Kanäle und der Stereotonkanal ST sofort abgreifbar, während die Schmalband-multiplexsignale SB mittels Schmalbanddemul-tiplexer SB-DMUX in die einzelnen ISDN-Kanäle zerlegt werden. Sendeseitig ist die Teilnehmerstelle mit einem Schmalbandmultiplexer SB-MUX und einem Bildfernsprechmultiplexer BIF-MUX ausgerüstet, mit denen die ISDN-Kanäle zum Schmalbandmultiplexsignal SB zusammengefaßt und letzteres zusammen mit dem Bildfernsprechkanal gemultiplext auf den optischen Sender, hier eine lichtemittierende Diode LED, und weiter über den Richtkoppler Kt auf den Lichtwellenleiter LWL gegeben wird. Aus Fig. 1 ist der Signalweg vom Lichtwellenleiter LWL über den Koppler K auf den optischen Empfänger, hier eine PIN-Diode PIN, an dessen Ausgang der Bildfernsprechdemultiplexer BIF-DMUX angeschlossen ist, erkennbar. Letzterer liefert das Bildfernsprechsignal BIF und das Schmalbandmultiplexsignal SB, welches wiederum durch den Schmalbanddemultiplexer SB-DMUX in die einzelnen ISDN-Kanäle zerlegt wird.

In Fig. 2 nicht gezeichnet ist der stromversorgende Ladungsspeicher. Gezeichnet ist eine Netzüberwachungseinheit Sig, die bei Netzausfall einen Netzalarm NA zur Zentrale signalisiert (gestrichelte Linie) und, gegebenenfalls nach Quittierung durch die Zentrale, die Schalter 3, 4, 5 betätigt, wodurch sendeseitig der Bildfernsprechmultiplexer BIF-MUX ausgangsseitig vom optischen Sender getrennt und der Schmalbandmultiplexer SB-MUX direkt an den Eingang des optischen Senders angeschaltet wird. Der Netzausfallalarm wird nach der Übertragung über die Lichtwellenleiterstrecke, nach der Umsetzung durch den optischen Empfänger PIN und nach der Kanalvielfach-Aufteilung in die einzelnen ISDN-Kanäle durch den Bildfernsprechdemultiplexer BIF-DMUX bzw. den Schmalbanddemultiplexer SB-DMUX in der Zentrale durch die Signalisiereinheit Sig erkannt, welche ihrerseits den Ausgang des optischen Empfängers vom Bildfernsprechdemultiplexer BIF-DMUX auf den Eingang des Schmalbanddemultiplexers SB-DMUX umschaltet, womit also in der Richtung vom Teilnehmer zur Zentrale auf die kleine Bitrate des Schmalbandbetriebes umgeschaltet ist.

In der Rückrichtung ist mit der Umschaltung des Ausgangs des Schmalbandmultiplexers SB-MUX auf den Eingang des optischen Senders LED in der Zentrale und beim Teilnehmer durch die Anschaltung des Eingangs des Schmalbanddemultiplexers SB-DMUX an den Ausgang eines zweiten optischen Empfängers PIN, der ebenfalls über den teilnehmerseitigen Richtkoppler Kt mit dem Lichtwellenleiter LWL verbunden ist, auf die kleinere Bitrate des Schmalbandbetriebs umgeschaltet.

Die funktionsmäßig abgetrennten teilnehmerseitigen Einrichtungen für den Breitbandbetrieb werden abgeschaltet, wodurch sich eine erhebliche Einsparung an Stromverbrauch ergibt.

Das erfindungsgemäße System weist weiterhin die Vorteile auf, daß es modular ausbaubar ist, ausgehend von einer 1. Ausbaustufe, die Fernsprechen und andere Schmalbanddienste umfaßt, über eine 2. Ausbaustufe, bei der Breitbandverteilung wie Fernsehen dazukommt, bis zu einer 3. Ausbaustufe, die Bildfernsprechen mit einschließt.

Bei den Ausbaustufen 2 und 3 kann die Bitrate als Alarmkriterium benutzt und ausgewertet werden, so daß eine besondere Alarmerzeugung bzw. Alarmeinbettung in einen ISDN-Kanal (gestrichelte Linien in den Figuren) entfallen kann.

Die hier gezeigte Ausgestaltung der Erfindung arbeitet mit Wellenmultiplex, wobei eine erste Wellenlänge, $\lambda 1$, beispielsweise 1,3 µm und eine zweite, $\lambda 2$, beispielsweise 1,5 µm aufweist. Selbstverständlich ist die Erfindung nicht auf Wellenmultiplexverfahren beschränkt, sondern sie kann auch bei Einsparung der optischen Koppler im Zeitgabelverfahren arbeiten.

**Patentansprüche**

1. Dienstintegriertes, digitales im Zeitmultiplex arbeitendes System mit Einrichtungen zur Übertragung von Schmal- und Breitbandsignalen zwischen einem Teilnehmer und einer Zentrale, wobei sendeseitig die Schmal- und Breitbandsignale durch Multiplexer zusammengefaßt, über ein Lichtwellenleitersystem übertragen und emp-fangsseitig durch Demultiplexer zurückgewon-nen werden, wobei die teilnehmerseitigen Einrichtungen, die durch das Netz mit Strom ver-sorgt werden, einen Ladungsspeicher aufwei-sen, der bei Netzausfall die Stromversorgung übernimmt, und wobei bei Netzausfall die Einrichtungen derart umschaltbar sind, daß die Übertragung über das Lichtwellenleitersystem (LWL) mit verminderter Bitrate erfolgt, dadurch gekennzeichnet, daß sowohl auf der Teilnehmerseite als auch in der Zentrale sendeseitig die Schmalbandsignale (ISDN) durch einen Schmalbandmultiplexer (SB-MUX) zu einem Schmal-bandmultiplexsignal (SB) und das Schmalband-multiplexsignal und die Breitbandsignale (TV, ST) durch einen Breitbandmultiplexer (BB-MUX) zu einem Breitbandmultiplexsignal zusammengefaßt und empfangsseitig durch einen Breit-banddemultiplexer (BB-DMUX) das Schmal-bandmultiplexsignal (SB) und die Breitbandsi-gnale (TV, ST) und durch einen Schmalbanddemultiplexer (SB-DMUX) die Schmalbandsignale (ISDN) zurückgewonnen werden und daß bei Netzausfall sendeseitig der Ausgang des Schmalbandmultiplexers (SB-MUX) auf den Eingang des Lichtwellenleitersystems (LWL) und empfangsseitig der Eingang des Schmalbanddemultiplexers (SB-DMUX) auf den Ausgang des Lichtwellenleitersystems (LWL) geschaltet werden.

2. Übertragungssystem nach Anspruch 1, dadurch gekennzeichnet, daß bei Netzausfall teilnehmerseitig ein Alarm (NA) erzeugt, als Schmalbandsignal zur Zentrale übertragen und dort ausgewertet wird.

3. Übertragungssystem nach einem der vorhergehenden Ansprüche, dadurch gekennzeichnet, daß das Lichtwellenleitersystem (LWL) zwei eingangsseitig parallelgeschaltete, optische Empfänger (PH, PIN) aufweist.

4. Übertragungssystem nach einem der vorhergehenden Ansprüche, dadurch gekennzeichnet, daß der optische Empfänger des Lichtwellenleitersystems (LWL) eine PIN-Diode (PIN) enthält.

5. Übertragungssystem nach einem der vorhergehenden Ansprüche, dadurch gekennzeichnet, daß das Lichtwellenleitersystem (LWL) nach dem Wellenmultiplexverfahren arbeitet.

6. Übertragungssystem nach einem der vorhergehenden Ansprüche, dadurch gekennzeichnet, daß das Lichtwellenleitersystem (LWL) nach dem Zeitgabelverfahren arbeitet.

7. Übertragungssystem nach einem der vorhergehenden Ansprüche, dadurch gekennzeichnet, daß bei Netzausfall nur die teilnehmerseitigen Einrichtungen für Schmalbandsignalübertragung durch den Ladungsspeicher mit Strom versorgt werden.

8. Übertragungssystem nach Anspruch 7, dadurch gekennzeichnet, daß der Ladungsspeicher eine netzgepufferte Batterie ist.

## Claims

1. Service-integrated digital system operating in time multiplex for the transmission of narrow and wide band signals between a subscriber and an exchange, wherein the narrow and wide band signals are combined by multiplexers and transmitted by way of a light wave conductor system at the transmitter side and regained through multiplexers at the receiver side, wherein the equipments, which are at the subscriber side and must be supplied with current through the mains, display a charge store which in case of mains failure takes over the current supply and wherein the equipments are in case of mains failure switchable over in such a manner that the transmission by way of the light wave conductor system (LWL) takes place at reduced bit rate, characterised thereby, that the narrow band signals (ISDN) are combined by a narrow band multiplexer (SB-MUX) into a narrow band multiplex signal (SB) and the narrow band multiplex signal and the wide band signals (TV, ST) are combined by a wide band multiplexer (BB-MUX) into a wide band multiplex signal at the transmitter side in the exchange as well as at the subscriber side and the narrow band multiplex signal (SB) and the wide band signals (TV, ST) are regained through a wide band demultiplexer (BB-DMUX) and the narrow band signals (ISDN) are regained through a narrow band demultiplexer (SB-DMUX) at the receiver side and that, in case of mains failure, the output of the narrow band multiplexer (SB-MUX) is switched to the input of the light wave conductor system (LWL) at the transmitter side and the input of the narrow band demultiplexer (SB-DMUX) is switched to the output of the light wave conductor system (LWL) at the receiver side.

2. Transmission system according to claim 1, characterised thereby, that in case of mains failure, an alarm (NA) is generated at the subscriber side, transmitted as narrow band signal to the exchange and evaluated there.

3. Transmission system according to one of the preceding claims, characterised thereby, that the light wave conductor system (LWL) displays two optical receivers (PH, PIN) connected in parallel at the input side.

4. Transmission system according to one of the preceding claims, characterised thereby, that the optical receiver of the light wave conductor system (LWL) is a PIN-diode (PIN).

5. Transmission system according to one of the preceding claims, characterised thereby, that the light wave conductor system (LWL) operates on the principle of the wave multiplex method.

6. Transmission system according to one of the preceding claims, characterised thereby, that the light wave conductor system (LWL) operates on the principle of the time fork method.

7. Transmission system according to one of the preceding claims, characterised thereby, that in case of mains failure, only the equipments for narrow band signal transmission at the subscriber side are supplied with current through the charge store.

8. Transmission system according to claim 7, characterised thereby, that the charge store is a battery floating on the mains.

## Revendications

1. Système numérique à services intégrés, fonctionnant en multiplex temporel avec des équipements pour la transmission de signaux à bande étroite et à large bande entre un abonné et un central; les signaux à bande étroite et à large bande étant concentrés par des multiplexeurs du côté émission, transmis par un système de guides optiques, puis reconstitués par des démultiplexeurs du côté réception; les équipements d'abonné, alimentés en courant par le réseau, comportant un accumulateur de charge qui assure l'alimentation en courant dans le cas d'une défaillance du réseau, pendant laquelle les équipements sont commutables de façon que la transmission s'effectue par le système de guides optiques (LWL), à un débit binaire réduit, ledit système étant caractérisé en ce que aussi bien chez l'abonné que dans le central, à l'émission, les signaux à bande étroite (ISDN) sont concentrés par un multiplexeur à bande étroite (SB-MUX) en un signal multiplexé à bande étroite (SB) et ce dernier et les signaux à large bande (TV, ST) sont concentrés par un multiplexeur à large bande (BB-MUX) en un signal multiplexé à large bande, et à la réception, le signal multiplexé à bande étroite (SB) et les signaux à large bande (TV, ST) sont reconstitués par un démultiplexeur à large bande (BB-DMUX), et les signaux à bande étroite (ISDN) par un démultiplexeur à bande étroite (SB-DMUX); et en cas de défaillance du réseau, la sortie du multiplexeur à bande étroite (SB-MUX) est connectée à l'entrée du système de guides optiques (LWL) du côté émission, et l'entrée du démultiplexeur à bande étroite (SB-DMUX) est connectée à la sortie du système de guides optiques (LWL) du côté réception.

2. Système de transmission selon revendication 1, caractérisé en ce que dans le cas d'une défaillance du réseau, une alarme (NA) est délivrée chez l'abonné, transmise sous forme d'un signal à bande étroite au central, puis interprétée dans ce dernier.

3. Système de transmission selon une des revendications 1 et 2, caractérisé en ce que le système de guides optiques (LWL) comporte deux récepteurs optiques (PH, PIN), dont les entrées sont couplées en parallèle.

4. Système de transmission selon une quelconque des revendications 1 à 3, caractérisé en ce que le récepteur optique du système de guides optiques (LWL) comporte une diode PIN (PIN).

5. Système de transmission selon une quelconque des revendications 1 à 4, caractérisé en ce que le système de guides optiques (LWL) fonctionne selon le procédé de multiplex en longueur d'onde.

6. Système de transmission selon une quelconque des revendications 1 à 5, caractérisé en ce que le système de guides optiques (LWL) fonctionne selon le procédé de multiplex temporel statistique.

7. Système de transmission selon une quelconque des revendications 1 à 6, caractérisé en ce que dans le cas d'une défaillance du réseau, seuls les équipements de l'abonné pour la transmission de signaux à bande étroite sont alimentés en courant par l'accumulateur de charge.

8. Système de transmission selon revendication 7, caractérisé en ce que l'accumulateur de charge est une batterie tamponnée par le réseau.

FIG.1

FIG.2